# EUROPEAN PATENT SPECIFICATION

(11) **EP 3 382 987 B1**
(45) Date of publication and mention of the grant of the patent: **29.09.2021**
(21) Application number: 18163678.8
(22) Date of filing: 23.03.2018
(51) Int. Cl.: H04L 29/06, H04W 12/00, H04W 12/50, H04M 1/725, H04W 12/04

(54) **INFORMATION PROCESSING APPARATUS, CONTROL METHOD, AND PROGRAM**
INFORMATIONSVERARBEITUNGSVORRICHTUNG, STEUERUNGSVERFAHREN UND PROGRAMM
APPAREIL DE TRAITEMENT D'INFORMATIONS, PROCÉDÉ DE COMMANDE ET PROGRAMME

(30) Priority: 31.03.2017 JP 2017072373
(43) Date of publication of application: 03.10.2018
(73) Proprietor: CANON KABUSHIKI KAISHA, Ohta-ku Tokyo 146-8501 (JP)
(72) Inventor: YOKOYAMA, Toshihiro, Ohta-ku, Tokyo (JP)
(74) Representative: Canon Europe Limited

(56) References cited:
- EP-A2- 1 538 787
- JP-A- 2016 107 612
- US-A1- 2007 201 389

## Description

### FIELD OF THE INVENTION

The present invention relates to an information processing apparatus and a control method therefor, and a program.

### BACKGROUND

Japanese Patent Laid-Open No. 2016-187090 describes a configuration in which pairing processing is executed to establish a Bluetooth connection between a printing apparatus and a mobile terminal.

However, according to Japanese Patent Laid-Open No. 2016-187090, switching of display processes performed by the mobile terminal depending on a function of the printing apparatus that executes the pairing processing is not taken into account. For example, even if information used for the pairing processing is different based on the function of the printing apparatus, there is a fear that same information is displayed. For this reason there is a fear that a user does not easily obtain information used for the pairing processing.

US 2007/0201389 A1 describes a communication apparatus capable of being connected to another communication apparatus that generates temporary connection information used in making a wireless connection. The apparatus presents this temporary connection information and makes a wireless connection to another communication apparatus based upon this temporary connection information.

### SUMMARY OF THE INVENTION

The present invention in its first aspect provides an information processing apparatus as specified in claims 1 to 7.

The present invention in its second aspect provides an information processing apparatus as specified in claims 8 to 14.

The present invention in its third aspect provides a program as specified in claim 15.

Further features, advantages and aspects of the present invention will become apparent from the following description of exemplary embodiments with reference to the attached drawings. Each of the embodiments of the present invention described below can be implemented solely or as a combination of a plurality of the embodiments. Also, features from different embodiments can be combined where necessary or where the combination of elements or features from individual embodiments in a single embodiment is beneficial.

### BRIEF DESCRIPTION OF THE DRAWINGS

Fig. 1 illustrates examples of configurations of an information processing apparatus and a communication apparatus according to an exemplary embodiment of the present invention.
Fig. 2 is an explanatory diagram for describing advertising information broadcast and reception processing for connection request information.
Fig. 3 is an explanatory diagram for describing advertising in Bluetooth Low Energy™ (BLE).
Figs. 4A and 4B illustrate screens related to pairing processing.
Fig. 5 is an explanatory diagram for describing display processing for a pairing procedure guide.
Fig. 6 illustrates a pairing procedure guide for a printer with an operation panel.
Fig. 7 illustrates a pairing procedure guide for a printer without an operation panel.
Fig. 8 illustrates a process flow executed between the information processing apparatus and the communication apparatus.
Fig. 9 illustrates the structure of advertising information.
Figs. 10A to 10J illustrate examples of screens displayed on the information processing apparatus.

### DESCRIPTION OF THE EMBODIMENTS

Hereinafter, exemplary embodiments of the present invention will be described for illustrative purposes with reference to the drawings.

### First exemplary embodiment

An information processing apparatus and a communication apparatus included in a communication system according to the present exemplary embodiment will now be described. A smart phone is exemplified as the information processing apparatus according to the present exemplary embodiment, but the configuration is not limited to this. Various devices such as a mobile terminal, a laptop personal computer (PC), a tablet terminal, a personal digital assistant (PDA), and a digital camera can be used as the information processing apparatus. In addition, a printer is exemplified as the communication apparatus according to the present exemplary embodiment, but the configuration is not limited to this. Various devices can be used as long as the device can perform a wireless communication with the information processing apparatus. For example, an inkjet printer, a full-color laser beam printer, a monochrome printer, and the like can be used as the printer. Not only the printer but also a copier, a facsimile (FAX) apparatus, a mobile terminal, a smart phone, a laptop PC, a tablet terminal, a PDA, a digital camera, a music player device, a television, and the like can be used. In addition, a multi-functional peripheral provided with a plurality of functions including a copying function, a FAX function, and a printing function can also be used as the communication apparatus.

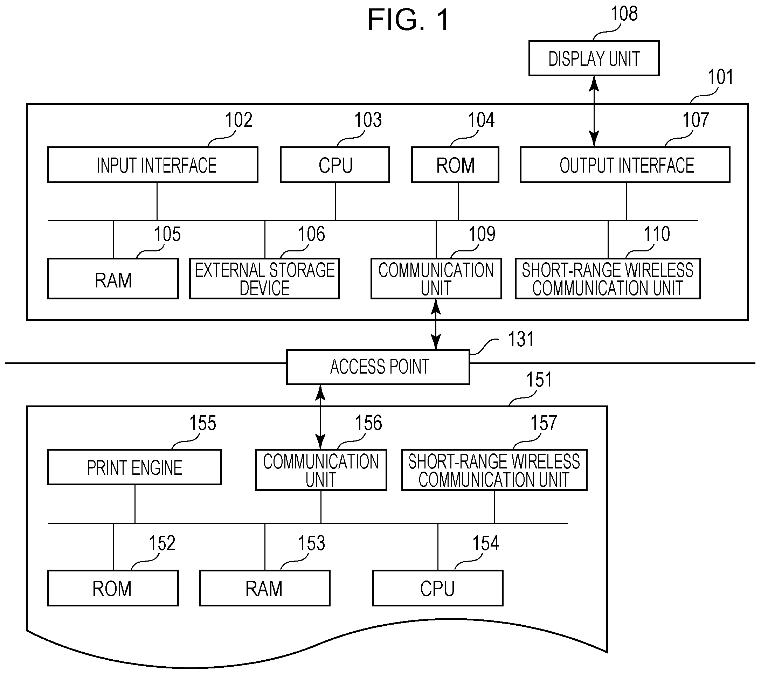

First, a configuration of the information processing apparatus according to the present exemplary embodiment and a configuration of the communication apparatus that can communicate with the information processing apparatus according to the present exemplary embodiment will be described with reference to a block diagram of Fig. 1. The following configuration will be described as an example according to the present exemplary embodiment, but the present exemplary embodiment can be applied to an apparatus that can perform a communication with the communication apparatus, and the function is not particularly limited as illustrated in Fig. 1.

An information processing apparatus 101 is an information processing apparatus according to the present exemplary embodiment. The information processing apparatus 101 includes an input interface 102, a central processing unit (CPU) 103, a read-only memory (ROM) 104, a random access memory (RAM) 105, an external storage device 106, an output interface 107, a display unit 108, a communication unit 109, a short-range wireless communication unit 110, and the like.

The input interface 102 is an interface that accepts a data input or an operation instruction from a user and is constituted by a physical keyboard, a button, a touch panel, or the like. It should be noted that a mode may be adopted in which the output interface 107 and the input interface 102 which will be described below have the same configuration, and an output of a screen and an acceptance of an operation from the user are performed by the same configuration. The acceptance of an operation from the user may comprise receiving a selection made by the user.

The CPU 103 is a system control unit and controls the entirety of the information processing apparatus 101.

The ROM 104 stores fixed data such as control programs executed by the CPU 103, a data table, or an embedded operating system (hereinafter, referred to as an OS) program. According to the present exemplary embodiment, the respective control programs stored in the ROM 104 perform software execution control such as scheduling, task switch, and interruption processing under management of the embedded OS stored in the ROM 104.

The RAM 105 is constituted by a static random access memory (SRAM) that uses a backup power source or the like. It should be noted that, since the RAM 105 holds data by a primary battery for data backup which is not illustrated in the drawing, it is possible to store important data such as program control variables without volatilization. In addition, a memory area for storing setting information of the information processing apparatus 101, management data of the information processing apparatus 101, and the like is provided in the RAM 105. The RAM 105 is also used as a main memory of the CPU 103 and a work memory.

The external storage device 106 saves an application that provides a printing execution function, a printing information generation program for generating printing information that can be interpreted by a communication apparatus 151, and the like. The external storage device 106 also saves various programs such as an information transmission and reception control program for performing transmission and reception with the communication apparatus 151 connected via the communication unit 109 and various information used by these programs.

The output interface 107 is a control interface for the display unit 108, and it is configured to carry out control processes for displaying data and notifications such as notifications of a state of the information processing apparatus 101.

The display unit 108 is constituted by a light emitting diode (LED), a liquid crystal display (LCD), or the like and displays data and notifications (e.g. of the state of the information processing apparatus 101). It should be noted that a soft keyboard provided with keys such as a numeric value input key, a mode setting key, an enter key, a cancel key, a power key may be installed on the display unit 108 to accept the input from the user via the display unit 108.

The communication unit 109 has a configuration for establishing a connection to an apparatus such as the communication apparatus 151 to execute a data communication. For example, the communication unit 109 can be connected to an access point in the communication apparatus 151 (not illustrated). When the communication unit 109 is connected to the access point in the communication apparatus 151, the information processing apparatus 101 and the communication apparatus 151 can communicate with each other. It should be noted that the communication unit 109 may directly communicate with the communication apparatus 151 using a wireless communication or may also communicate with the communication apparatus 151 via an external access point existing outside the information processing apparatus 101 or the communication apparatus 151 (an access point 131). The wireless communication method includes, for example, Wireless Fidelity (Wi-Fi) (registered trademark), Bluetooth (registered trademark), or the like. In addition, the access point 131 includes, for example, a device such as a wireless LAN router. It should be noted that, according to the present exemplary embodiment, a method for the information processing apparatus 101 to directly communicate with the communication apparatus 151 without the intermediation of the external access point is referred to as a direct communication method. On the other hand, a method for the information processing apparatus 101 to communicate with the communication apparatus 151 via the access point is referred to as an infrastructure communication method.

The short-range wireless communication unit 110 has a configuration for being wirelessly connected to an apparatus such as the communication apparatus 151 in a short range to perform the data communication and perform the communication by a communication method different from that of the communication unit 109. The short-range wireless communication unit 110 can be connected to a short-range wireless communication unit 157 in the communication apparatus 151. It should be noted that Bluetooth Low Energy (BLE) is used as a communication method of the short-range wireless communication unit 110 according to the present exemplary embodiment.

The communication apparatus 151 has a short-range wireless communication unit 157 according to the present exemplary embodiment. The communication apparatus 151 includes a ROM 152, a RAM 153, a CPU 154, a print engine 155, a communication unit 156, the short-range wireless communication unit 157, and the like.

The communication unit 156 includes an access point for establishing a connection to an apparatus such as the information processing apparatus 101 as the access point inside the communication apparatus 151. It should be noted that the access point can be connected to the communication unit 109 of the information processing apparatus 101. It should be noted that the communication unit 156 may directly communicate with the information processing apparatus 101 by the wireless communication or may also communicate via the access point 131. The communication method includes, for example, Wi-Fi (registered trademark), Bluetooth (registered trademark), or the like. In addition, the communication unit 156 may be provided with hardware that functions as an access point or may also operate as an access point by software for causing the communication unit 156 to function as the access point.

The short-range wireless communication unit 157 has a configuration for establishing a wireless connection in a short range to an apparatus such as the information processing apparatus 101. According to the present exemplary embodiment, Bluetooth Low Energy (BLE) is used as the communication method of the short-range wireless communication unit 157.

The RAM 153 is constituted by an SRAM that uses a backup power source or the like. It should be noted that, since the RAM 153 holds data by a primary battery for data backup which is not illustrated in the drawing, it is possible to store important data such as program control variables without volatilization. In addition, a memory area for storing setting information of the communication apparatus 151, management data of the communication apparatus 151, and the like is provided in the RAM 153. The RAM 153 is also used as a main memory of the CPU 154 and a work memory. The RAM 153 saves a reception buffer that temporarily saves printing information received from the information processing apparatus 101 or the like and various information.

The ROM 152 stores fixed data such as the control programs executed by the CPU 154, the data table, and the OS program. According to the present exemplary embodiment, the respective control programs stored in the ROM 152 performs software execution control such as scheduling, task switch, or interruption processing under the management of the embedded OS stored in the ROM 152.

The CPU 154 is a system control unit and controls the entirety of the communication apparatus 151.

The print engine 155 forms an image on a recording medium such as paper by using a recording material such as ink and outputs a printed result on the basis of the information saved in the RAM 153 and the print information received from the information processing apparatus 101 or the like. At this time, the printing information transmitted from the information processing apparatus 101 or the like has a large transmission data amount, and a high speed communication is demanded. Therefore, the printing information is preferably received via the communication unit 156 that can communicate at a higher speed than that of the short-range wireless communication unit 157.

It should be noted that a memory such as an external HDD or an SD card may be mounted to the communication apparatus 151 as an optional device, and the information saved in the communication apparatus 151 may be saved in the memory.

While a connection mode is set by a connection setting processing, the communication apparatus according to the present exemplary embodiment communicates with the information processing apparatus by a connection configuration based on the set connection mode. In a case where the communication apparatus according to the present exemplary embodiment performs the communication using the infrastructure connection, an infrastructure connection mode is set as the connection mode. In a case where the communication apparatus performs the communication using the direct connection, a direct connection mode is set as the connection mode.

Herein, allocation of the processes to the information processing apparatus 101 and the communication apparatus 151 has been illustrated in the above as an example, but the mode is not particularly limited to this allocation configuration and may adopt other configurations.

According to the present exemplary embodiment, the information processing apparatus 101 stores a predetermined application in the ROM 104, the external storage device 106, or the like. The predetermined application is, for example, an application program for transmitting the printing information for printing image data, document data, or the like in the information processing apparatus 101 to the communication apparatus 151. An application having the above-described function will be hereinafter referred to as a printing application. It should be noted that the printing application may be provided with a function other than the printing function. For example, in a case where the communication apparatus 151 is provided with a scanning function, the printing application may be provided with a function for scanning a document set in the communication apparatus 151, a function for performing another setting of the communication apparatus 151, a function for checking a status of the communication apparatus 151, and the like. That is, the printing application may also include a function for transmitting a scanning job or a setting job to the communication apparatus 151 in addition to the printing information. In addition, the predetermined application is not limited to the printing application and may be an application program provided with a function other than the printing.

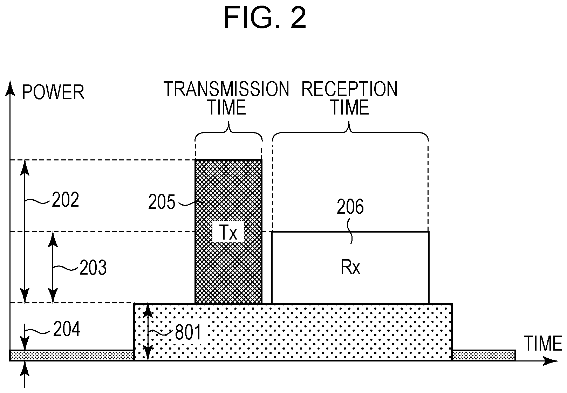

It will be appreciated that in the present exemplary embodiment, the short-range wireless communication unit 110 and the short-range wireless communication unit 157 are set to communicate on the basis of the BLE. It should be noted that, according to the present exemplary embodiment, the short-range wireless communication unit 157 functions as an advertiser (or a slave) which broadcasts advertising information which will be described below, and the short-range wireless communication unit 110 functions as a scanner (or a master) which receives the advertising information. In addition to the BLE communication, descriptions herein will also describe cases where the communication unit 109 and the communication unit 156 are set to perform the communication on the basis of the wireless LAN (Wi-Fi). Here, processing of transmitting the advertising information and processing of receiving a BLE connection request in the BLE specification will be described. According to the present exemplary embodiment, in order that the short-range wireless communication unit 157 operates as the slave device as described above, the short-range wireless communication unit 157 performs the above-described processing. The short-range wireless communication unit 157 divides a frequency band of 2.4 GHz into 40 channels (0 to 39 ch) to perform the communication. The short-range wireless communication unit 157 uses the 37th to 39th channels among the 40 channels for the transmission of the advertising information and the reception of the BLE connection request and uses 0th to 36th channels for the data communication after the BLE connection. In Fig. 2, the horizontal axis represents power consumption of the short-range wireless communication unit 157, and the horizontal axis represents the time. In Fig. 2, power consumption when the advertising information is transmitted by using a single channel is illustrated for each processing. Tx 205 indicates total power consumption in transmission processing corresponding to processing for broadcasting the advertising information, and Rx 206 indicates total power consumption in reception processing corresponding to processing for enabling a receiver configured to receive the BLE connection request. Transmission power 202 indicates instantaneous power consumption by the transmission processing. Reception power 203 indicates instantaneous power consumption by the reception processing. Microcomputer operation power 201 indicates instantaneous power consumption in a case where the microcomputer in the short-range wireless communication unit 157 operates. It should be noted that a reason why the microcomputer operates before, after, and between the Tx 205 and the Rx 206 is that the microcomputer is to be activated in advance to execute or stop the transmission and reception processes. In a case where the transmission of the advertising information is performed by using a plurality of channels, the power consumption is accordingly increased by the number of channels for performing the transmission of the advertising information. While the microcomputer does not operate and the short-range wireless communication unit 157 is in a power saving state, sleep state power 204 corresponds to the instantaneous power consumption of the short-range wireless communication unit 157. In this manner, the short-range wireless communication unit 157 performs the transmission processing by using a predetermined channel and thereafter performs the reception processing for a certain period of time by using the same channel to wait for the transmission of the BLE connection request from the information processing apparatus 101.

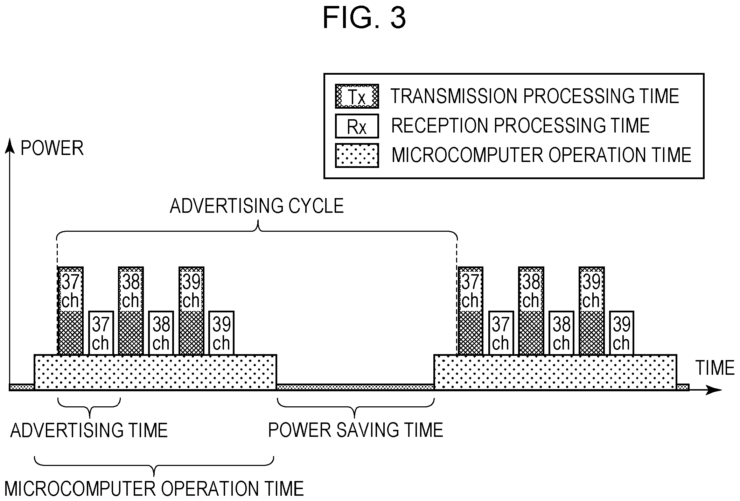

As illustrated in Fig. 3, the short-range wireless communication unit 157 repeats the transmission processing and the reception processing of the advertising information three times for each channel and then stops the operation of the microcomputer to establish the power saving state for a certain period of time. Herein, a combination of the transmission processing and the reception processing of the advertising information by the predetermined channel will be referred to as advertising. A time cycle for transmitting the advertising information by the predetermined channel will be referred to as an advertising cycle. It should be noted that the number of times to repeat the advertising until the power saving state is established after the first advertising is performed can be arbitrarily changed as long as the number of times is three or lower.

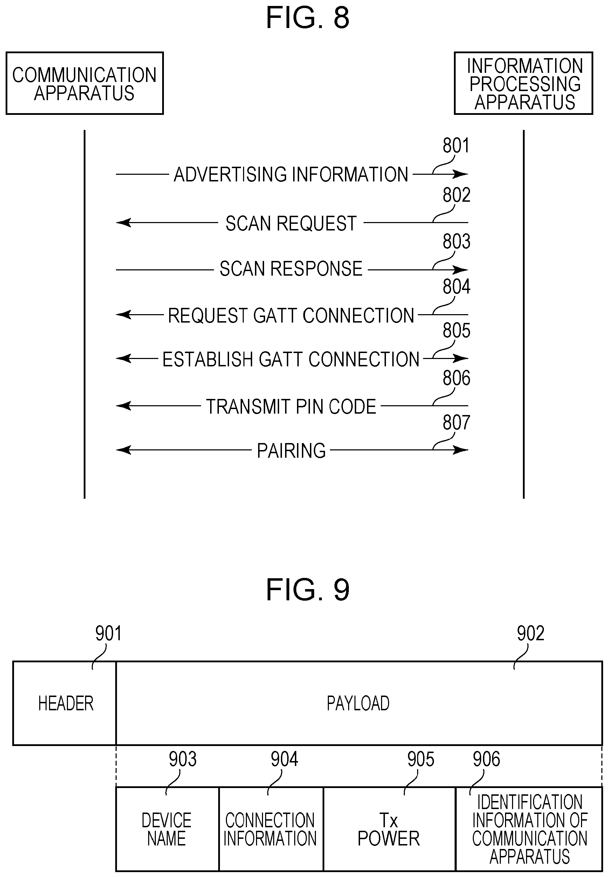

Fig. 9 illustrates an example of a structure of the advertising information that is broadcasted by the short-range wireless communication unit 157, and which may be received by the communication apparatus 151.

When power supply is started, the short-range wireless communication unit 157 performs initialization processing to establish an advertising state. When the advertising state is established, the short-range wireless communication unit 157 regularly broadcasts the advertising information to the surrounding on the basis of the advertising cycle. The advertising information is a signal including basis header information (such as identification information for identifying an apparatus that transmits the advertising information) and is constituted by a header 901 and a payload 902. The information processing apparatus 101 can recognize the presence of the communication apparatus 151 by receiving this advertising information. Furthermore, the information processing apparatus 101 can establish the BLE connection to the communication apparatus 151 by transmitting the BLE connection request to the communication apparatus 151. The header 901 is an area for storing information such as a PDU type of the advertising information and a size of the payload 902. In a case where the PDU type is ADV_IND or ADV_SCAN_IND, the short-range wireless communication unit 110 can issue a scan request (SCAN_REQ) to the short-range wireless communication unit 157. When a scan request is received by the communication apparatus 151, the short-range wireless communication unit 157 of the communication apparatus 151 transmits scan response information (SCAN_RSP). When the scan response information is received by the information processing apparatus 101 via the short-range wireless communication unit 110, the information processing apparatus 101 can obtain the information included in the scan response in addition to the advertising information from the communication apparatus 151. The payload 902 includes a device name 903 as the identification information, installed profile information, connection information 904 for establishing the BLE connection to the communication apparatus 151, and information such as transmission power of the advertising information (Tx Power) 905. It should be noted that identification information 906 of the communication apparatus may be included in the advertising information. The identification information 906 of the communication apparatus preferably specifies a MAC address of the communication apparatus, and it may include service information of the communication apparatus, the presence or absence of an operation panel (operation screen) included in the communication apparatus, an SSID of the access point the communication apparatus, and/or a password, and the like. The information processing apparatus 101 can obtaining these information (ex. SSID, the MAC address and the presence or absence of an operation panel) as information included in the scan response. The scan response information basically includes a structure similar to the advertising information. The PDU type included in the header 901 of the scan response information is SCAN_RSP, and information different from the advertising information may also be stored as the information stored in the payload 902 when needed. It should be noted that the operation panel included in the communication apparatus may be a touch panel or a liquid crystal display or may also adopt another configuration.

According to the present exemplary embodiment, the short-range wireless communication unit 157 enters the advertising state in a case where power of the communication apparatus 151 is turned ON and starts the transmission of the advertising information. It should be noted however that a timing when the short-range wireless communication unit 157 starts the transmission of the advertising information is not limited to the above-described configuration and may also be a timing when a predetermined operation for enabling the BLE function is performed or the like, for example.

It should be noted that, for example, the short-range wireless communication unit 157 first transmits first advertising information. Then, in a case where the short-range wireless communication unit 157 receives a response (scan request) with respect to the first advertising information from the information processing apparatus 101, a configuration may also be adopted in which second advertising information having different contents from those of the first advertising information is transmitted. Herein, the second advertising information may also be referred to as scan response information in some cases. It should be noted that, for example, the first advertising information includes an IP address of the communication apparatus 151, a port used for the printing, information indicating a particular printing service, information related to the transmission power of the advertising information, the identification information of the short-range wireless communication unit 157, and the like. The second advertising information includes identification information (UUID) of the communication apparatus 151, a function included in the communication apparatus 151, information related to hardware (for example, operation panel information indicating whether or not the above-described operation panel is included), and the like. In the case of the above-described configuration, for example, the printing application is designed so as to handle (i.e. use the information in) the second advertising information. For this reason, the advertising information handled by the printing application in the following descriptions is set as the second advertising information.

According to the present exemplary embodiment, the pairing processing is executed by performing authentication between the information processing apparatus 101 and the communication apparatus 151 to permit read and write of particular data by a generic attribute profile (GATT) communication between the apparatuses. It should be noted that the GATT is a profile for governing the read and write (transmission and reception) of the information in the BLE specification. The GATT communication is a communication in which the information processing apparatus 101 takes a role of a GATT client and the communication apparatus 151 takes a role of a GATT server, and the read and write operations of the information are performed with respect to the communication apparatus 151 from the information processing apparatus 101 on the basis of a profile of a GATT base. In a state in which the pairing between the information processing apparatus 101 and the communication apparatus 151 is not executed, the communication apparatus 151 is configured to prohibit the read and write of the information by the GATT communication. When the above-described configuration is adopted, it is possible to avoid a situation where the information processing apparatus 101 and the communication apparatus 151 which do not perform the pairing carry out the communication, and the information held by the communication apparatus 151 is unintentionally obtained by the information processing apparatus 101 that has not performed the pairing, for example. It should be noted that the GATT communication permitted in a state in which the pairing is not performed and the GATT communication prohibited in a state in which the pairing is not performed exist according to the present exemplary embodiment. While the information having low confidentiality can be communicated by the GATT communication permitted in a state in which the pairing is not performed, it is possible to improve convenience of the communication. On the other hand, while the information having high confidentiality can only be communicated by the GATT communication prohibited in a state in which the pairing is not performed, it is possible to improve the security. It should be noted that state information and setting information of the communication apparatus 151 are exemplified as examples of information having the high confidentiality. It should be noted that, since the authentication processing is executed by using a personal identification number (PIN) code to perform the pairing processing as will be described below, the pairing processing may be referred to as authentication processing in some cases. In addition, since the PIN code is used as information used for the authentication, the PIN code may be referred to as authentication information in some cases.

A detail of the pairing processing will be described. First, in a case where the above-described printing application is activated and an execution instruction of the pairing processing is accepted from the user via the printing application, the information processing apparatus 101 starts a search for the advertising information having the particular apparatus information. It should be noted that the particular apparatus information is, for example, a UUID, a MAC address, or the like of an apparatus (such as a printer) corresponding to the printing application. Subsequently, when the advertising information having the particular apparatus information is received, the information processing apparatus 101 displays a list of apparatuses at a transmission source of the advertising information having the particular apparatus information on a display unit and accepts a selection of the apparatus set as the pairing target from the user. Herein, descriptions will be given while it is set that the communication apparatus 151 is selected.

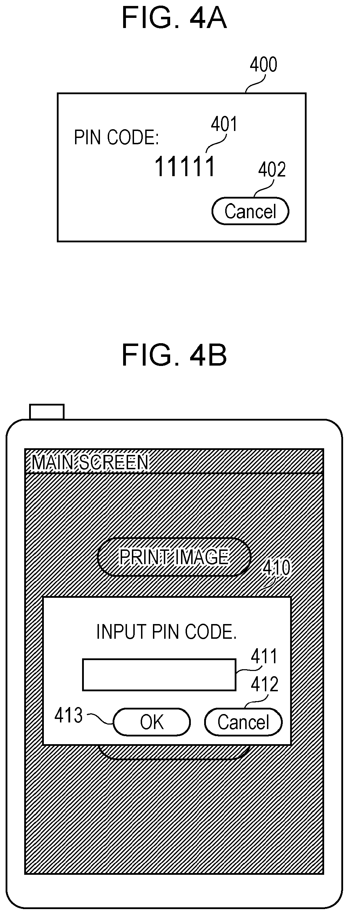

Subsequently, in a case where the selection of the apparatus set as the pairing target is accepted, the information processing apparatus 101 transmits a pairing request to the communication apparatus 151 by a communication based on a security manager protocol. It should be noted that the communication between the apparatuses is performed on the basis of the security manager protocol until the pairing is ended. When the pairing request is received, the communication apparatus 151 displays a PIN code display screen 400 illustrated in Fig. 4A on the operation panel. A PIN code 401 and a cancel button 402 for cancelling the pairing processing are displayed on the PIN code display screen 400. Thereafter, when the pairing request is transmitted, the information processing apparatus 101 displays a PIN code input screen 410 illustrated in Fig. 4B on the display unit 108. A PIN code input area 411 for accepting an input of the PIN code 401 by the user is displayed on the PIN code input screen 410. Furthermore, an OK button 413 for transmitting the input PIN code 401 to the communication apparatus 151 and a cancel button 412 for cancelling the pairing processing are displayed. When the OK button 413 is pressed in a state in which the PIN code 401 is input to the PIN code input area 411, the information processing apparatus 101 transmits the information including the input PIN code 401 to the communication apparatus 151. The communication apparatus 151 determines whether or not the PIN code 401 included in the received information is matched with the PIN code 401 displayed on the PIN code display screen 400. In a case where it is determined that the PIN codes are matched with each other, the information processing apparatus 101 is permitted to perform the pairing. Specifically, the communication apparatus 151 exchanges a link key (which may be created by a predetermined method on the basis of the PIN code 401) with the information processing apparatus 101, preferably by using a security manager protocol (SMP) of the BLE specification. The exchanged link keys are respectively saved in the storage area included in the information processing apparatus 101 (such as the ROM 104) and the storage area included in the communication apparatus 151 (such as the ROM 152). As a result, the pairing is completed, and thereafter, the execution of the BLE communication between the apparatuses is permitted. It should be noted that, when the pairing is completed, the communication apparatus 151 hides the PIN code display screen 400 and displays the original screen again.

After the completion of the pairing, when the GATT communication (e.g. the GATT communication permitted in a state in which the pairing is performed) request is transmitted to the communication apparatus 151, the information processing apparatus 101 notifies the communication apparatus 151 of the link key saved in the storage area at the time of the pairing processing. In a case where the GATT communication request is received, the communication apparatus 151 compares the link key saved in the storage area at the time of the pairing processing with the notified link key and confirms whether or not the apparatus that has issued the GATT communication request is the already paired apparatus. In a case where the communication apparatus 151 can confirm that the apparatus is the already paired apparatus, the communication apparatus 151 starts the read and write of the information by the GATT communication with the information processing apparatus 101. As a result, once the information processing apparatus 101 completes the pairing processing with the communication apparatus 151, it is possible to hereinafter execute the GATT communication with the communication apparatus 151 without the input of the PIN code by the user. It should be noted that the configuration has been described above in which the user is asked to input the PIN code 401 displayed on the PIN code input screen 410 to the PIN code input area 411, but the configuration is not limited to the above. For example, a configuration may also be adopted in which the PIN code 401 is set as fixed information (which is not to be arbitrarily changed by the user) and is stored in the information processing apparatus 101 together with the installation of the printing application, so that the communication apparatus 151 is notified of the PIN code 401 without the input by the user. In addition, the timing when the pairing processing is started is not limited to the above-described configuration. For example, the pairing may be started at a time when the user instructs the printing via the printing application, a time before the BLE connection is performed in the connection setting processing, or the like.

A configuration may also be adopted in which the PIN code input screen 410 to be displayed by the information processing apparatus 101 is not displayed by the printing application. For example, the information processing apparatus 101 may also include a setting application (app). The setting application is an application program for performing a setting with regard to the function executed by the OS. The setting application is, for example, an application program that is also installed in the series of processes in which the OS is installed into the information processing apparatus 101 or an application program that is previously installed into the information processing apparatus 101 together with the OS at the time of arrival of shipment of the information processing apparatus 101. In a case where the pairing instruction is input by the printing application, the information processing apparatus 101 activates the setting application and shifts the printing application into background. Then, the user may accept an input for the pairing with respect to a Bluetooth setting screen displayed by the setting application from the user. According to the present exemplary embodiment, an example will be described in which the information processing apparatus 101 displays an appropriate guide for assisting the pairing processing to the user on the basis of the operation panel information included in the scan response information of the communication apparatus 151.

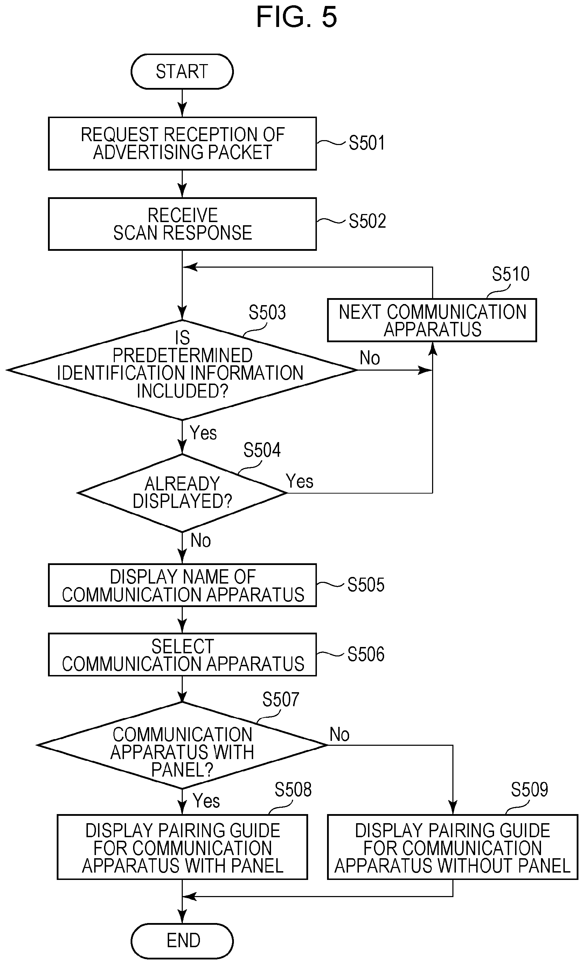

Fig. 5 illustrates a processing flow of the information processing apparatus 101 according to the present exemplary embodiment. It should be noted that a flow chart according to the present exemplary embodiment is implemented when the CPU 103 reads out information used for the processing in the flow chart from the RAM 105 and executes the read information.

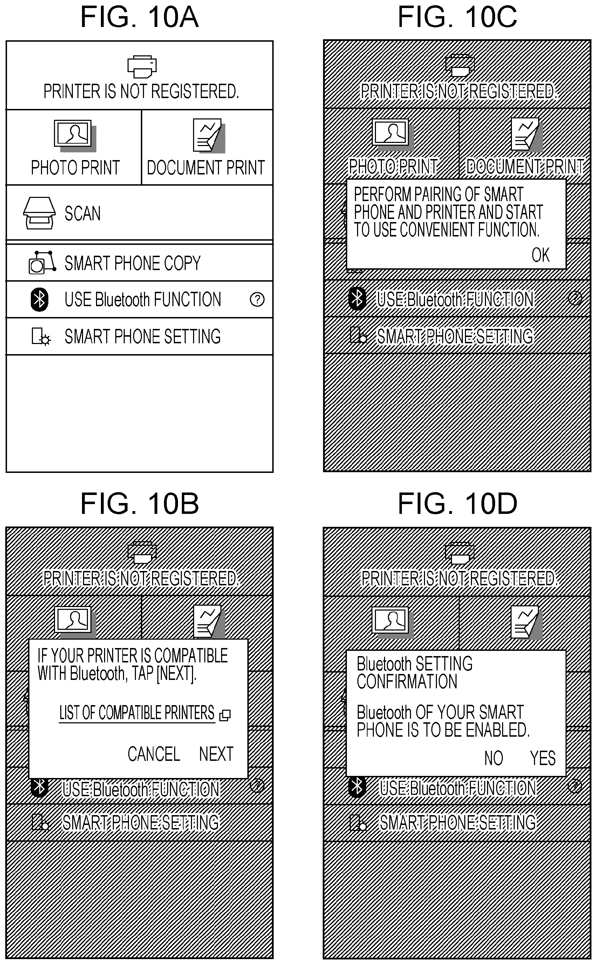

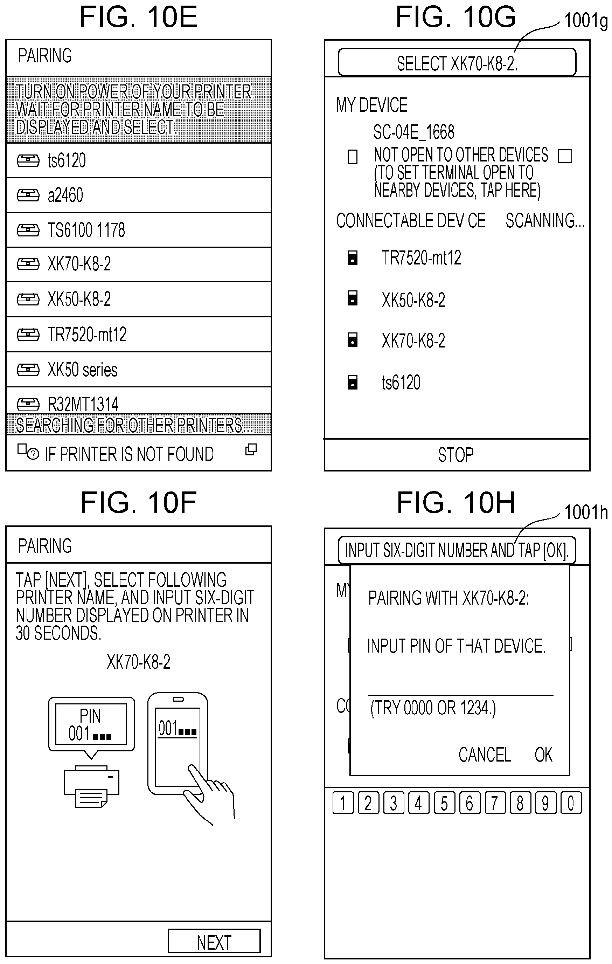

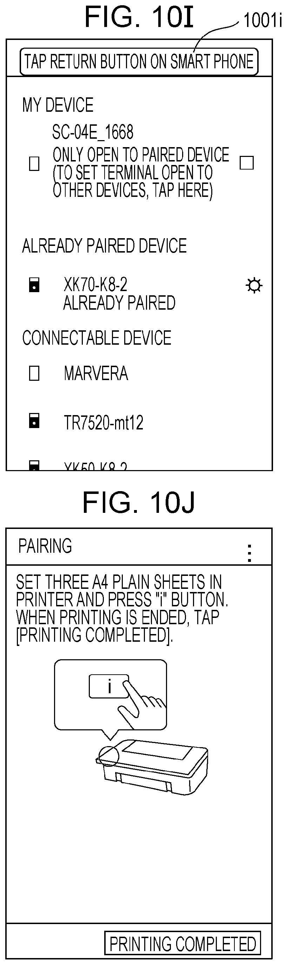

It should be noted that, before the processing of Fig. 5 is described, screens on the information processing apparatus 101 which are illustrated in Figs. 10A to 10J will be described. The screens illustrated in Figs. 10A to 10F and Fig. 10J are provided by the printing application. On the other hand, the screens illustrated in Figs. 10G to 10I are the Bluetooth setting screens provided by the setting application. First, in a case where the printing application is activated by the instruction of the user in the information processing apparatus 101, the screen of Fig. 10A is displayed as an initial screen of the printing application. In a case where "use Bluetooth function" is selected by the user in Fig. 10A, the screens of Figs. 10B to 10D are sequentially displayed. In a case where Bluetooth is enabled in the information processing apparatus 101 before an "OK" button is pressed in Fig. 10C, the screen of Fig. 10E is displayed when the processing which will be described below is executed. It should be noted that the screen of Fig. 10D is not displayed in this case. On the other hand, in a case where Bluetooth is not enabled in the information processing apparatus 101 before the "OK" button is pressed on the screen of Fig. 10C, the screen of Fig. 10D is displayed. In a case where "YES" is selected, the processing which will be described below is executed, and the screen of Fig. 10E is displayed.

In S501, the CPU 103 requests the OS to receive the advertising information (the first advertising information) from the communication apparatus 151 - i.e. at step S501 the information processing apparatus 101 is set to receive advertisement information from communication apparatuses such as communication apparatus 151. The OS that has received the above-described request receives the first advertising information issued from the communication apparatus 151 existing in the surrounding of the information processing apparatus 101. The PDU type included in the first advertising information is ADV_IND or ADV_SCAN_IND for permitting the scan request with respect to the communication apparatus 151. Therefore, the OS receives the scan response information by issuing the scan request to the communication apparatus 151 that has transmitted the first advertising information in which the above-described scan request is permitted. The CPU 103 notifies the printing application of the advertising information (the first advertising information) and the scan response information (S502) and determines whether or not the scan response information includes predetermined identification information (S503). In a case where Yes is determined in S503, the CPU 103 determines whether or not the name of the communication apparatus that has transmitted the scan response information is displayed on the screen of the printing application (Fig. 10E) (S504). When the above-described processes are executed, the CPU 103 displays the communication apparatuses that have transmitted the scan response information including the predetermined identification information without duplication on the screen of the printing setting application (S505). It should be noted that the screen illustrated in Fig. 10E which includes the communication apparatuses set as the candidates for the pairing processing is displayed by the processing in S505.

The CPU 103 also saves and associates the respective scan response information and the identification information 906 of each of the displayed communication apparatus in the RAM 105. In Fig. 10E, in a case where a user selects the "if printer is not found" command, the CPU 103 activates a web browser and displays a web manual. This web manual displays check items of the communication apparatus.

In a case where No is determined in S503 or Yes is determined in S504, the CPU 103 changes the scan response information of the determination target to the scan response information issued by the next communication apparatus and returns the processing to S503.

The CPU 103 selects the communication apparatus selected from the list of the communication apparatuses which is displayed in S505 as a notification apparatus of the pairing target (S506).

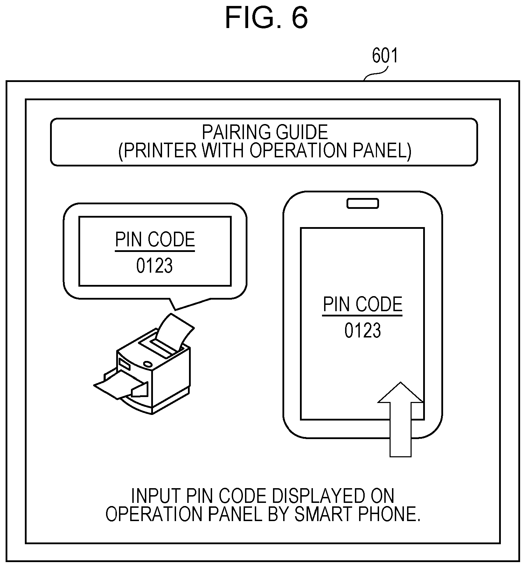

The CPU 103 reads out the scan response information corresponding to the communication apparatus selected in S506 from the RAM 105. The CPU 103 then checks the information related to the presence or absence of the operation panel included in the read scan response information (S507) of the selected communication apparatus. This information is represented by two types of values including "with operation panel" and "without operation panel". In a case where the scan response information includes the information indicating "with operation panel", the flow proceeds to S508. In a case where the scan response information includes the information indicating "without operation panel", the flow proceeds to S509. In S508, the CPU 103 displays the pairing procedure for the printer with the operation panel via the display unit 108. In S509, the CPU 103 displays the pairing procedure for the printer without operation panel via the display unit 108. It should be noted that, in a case where Yes is determined in S507, the pairing guide for the communication apparatus without the panel is not displayed. On the other hand, in a case where No is determined in S507, the pairing guide for the communication apparatus with the panel is not displayed. Fig. 6 illustrates an example of the pairing procedure guide which may be displayed in S508 if the selected printer is determined to have an operation panel. In this example, the PIN code is displayed on the operation panel included in the communication apparatus 151. In addition, this example illustrates that the user inputs the PIN code displayed on the operation panel of the communication apparatus 151 via the input interface 102 included in the information processing apparatus 101, so that the pairing processing between the information processing apparatus 101 and the communication apparatus 151 can be executed. The screen of Fig. 10G may be displayed after an elapse of a predetermined period of time since the pairing procedure guide of Fig. 6 is displayed - e.g. the screen of Fig. 10G may be displayed if a timeout occurs. The screen illustrated in Fig. 10F may be displayed instead of the pairing procedure guide of Fig. 6. In a case where the screen of Fig. 10F is displayed, the screen of Fig. 10G is displayed when "NEXT" is selected by the user on the screen of Fig. 10F.

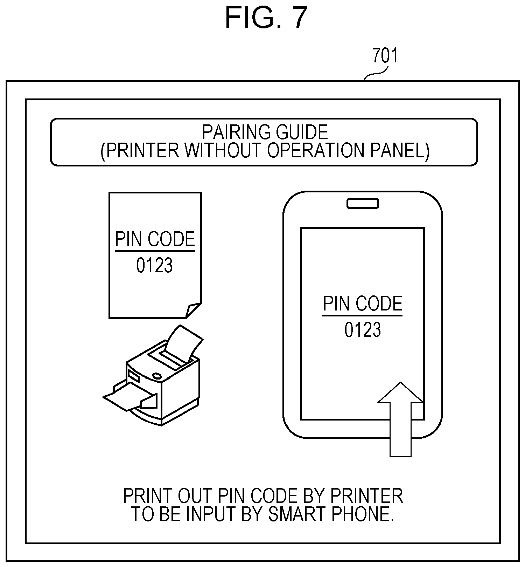

Fig. 7 illustrates an example of the pairing procedure guide which may be displayed at step S509, if the selected printer is determined to not have an operational panel. In this example, the PIN code is output as a printed product via the print engine 155 included in the communication apparatus 151. This example illustrates that, when the user inputs the PIN code printed on the printed product via the input interface 102 included in the information processing apparatus 101, the pairing processing between the information processing apparatus 101 and the communication apparatus 151 can be executed. The screen of Fig. 10G may be displayed after an elapse of a predetermined period of time since the pairing procedure guide of Fig. 7 is displayed. The screen illustrated in Fig. 10J may be displayed instead of the pairing procedure guide of Fig. 7. "Sheet size", "number of sheets", and "information indicating button in the communication apparatus to be pressed" are displayed on the screen of Fig. 10J. In a case where the screen of Fig. 10J is displayed, the screen of Fig. 10G is displayed when "printing completed" is selected by the user on the screen of Fig. 10J. It should be noted that at least the PIN code used for the pairing processing is printed on the printed product printed when the user operates the communication apparatus 151 in accordance with the instruction displayed on the screen of Fig. 10J. It should be noted that information other than the PIN code may also be printed.

A message 1001g is overlapped with the Bluetooth setting screen provided by the setting application of Fig. 10G and displayed. This message is created by the printing application on the basis of the communication apparatus selected in Fig. 10E and displayed. In a case where the user selects the communication apparatus in Fig. 10G, the screen of Fig. 10H is displayed.

Fig. 10H illustrates an example of the screen displayed when the user selects the communication apparatus corresponding to the message 1001g in Fig. 10G.

The PIN code displayed on the operation panel of the communication apparatus or the PIN code described on the printed product that has been printed by the communication apparatus is input on the input screen of the PIN code of Fig. 10H. When the OK button is pressed, the pairing processing between the information processing apparatus 101 and the communication apparatus 151 is executed. It should be noted that a message 1001h is overlapped with the screen provided by the setting application of Fig. 10H to be displayed. The message 1001h is also generated by the printing application to be displayed. It should be noted that, in a case where the selection of the communication apparatus of the pairing target is detected in Fig. 10G, the printing application displays the message 1001h as illustrated in Fig. 10H.

When the pairing processing is completed, the screen of Fig. 10I is displayed. It should be noted that a message 1001i is overlapped with the screen provided by the setting application of Fig. 10I to be displayed. The message 1001i is also generated by the printing application to be displayed. In a case where the completion of the pairing is detected, the printing application displays the message 1001i as illustrated in Fig. 10I.

In a case where the user selects the message 1001i, the printing application shifted into the background is displayed again.

A flow of processes which may be executed by the information processing apparatus 101 and the communication apparatus 151 will be described with reference to Fig. 8.

The communication apparatus 151 transmits the advertising information (801). When the advertising information is received, the information processing apparatus 101 transmits the scan request (802). Then, in a case where the communication apparatus 151 receives the scan request, the scan response is transmitted (803). Then, since the information processing apparatus 101 receives the scan response from the communication apparatus, the processing in S502 and subsequent steps described above can be executed.

In a case where the communication apparatus (XK70-L8-2) is selected is Fig. 10G, the information processing apparatus 101 transmits the GATT connection request (804). When the GATT connection (e.g. the GATT communication permitted in a state in which the pairing is not performed) is then established between the information processing apparatus 101 and the communication apparatus 151 (805), the information processing apparatus 101 transmits the input PIN code in Fig. 10H (806). At this time, in a case where the correct PIN code is transmitted, the pairing processing between the information processing apparatus 101 and the communication apparatus 151 succeeds (807) .

As described above, according to the present exemplary embodiment, the reference is made to the operation panel information included in the scan response information of the communication apparatus 151 in the information processing apparatus 101. Subsequently, the information processing apparatus 101 can execute the display control processing for displaying the appropriate pairing procedure guide in accordance with the presence or absence of the operation panel on the display unit 108 of the information processing apparatus 101. As a result, it is possible to assist the user operation used for the pairing between the information processing apparatus 101 and the communication apparatus 151.

### Other exemplary embodiments

According to the first exemplary embodiment, in S502 to S504, the reference is made to the operation panel information included in the scan response information of the communication apparatus 151, but the first advertising information of the communication apparatus 151 which is received in S501 includes the information related to the presence or absence of the operation panel. In this case, the processes in S502 and S503 may be avoided, and the reference may be made to the operation panel information included in the first advertising information instead of the scan response information in S504.

In addition, according to the first exemplary embodiment, the guide to be displayed is switched depending on whether or not the communication apparatus includes the panel, but the guide to be displayed may be switched by another determination reference. For example, in a case where the size of the panel included in the communication apparatus is smaller than a predetermined size, S509 may be executed, and in a case where the size of the panel included in the communication apparatus is larger than the predetermined size, S508 may be executed. It should be noted that the size of the operation panel is also an example, and whether to execute S508 or whether to execute S509 may be determined depending on other information of the communication apparatus.

It should be noted that, according to the present exemplary embodiment, the example in which the BLE is used as the short-range wireless communication unit has been described, but a different short-range wireless communication unit may also be used such as Zigbee.

The above-described exemplary embodiment is also realized when the following processes are executed. That is, software (program) for realizing the functions of the above-described exemplary embodiment is supplied to a system or an apparatus via a network or various storage media. Then, a computer (such as a CPU, an MPU, or a processor) of the system or the apparatus reads out the program to be executed for the processes. In addition, the program may be executed by a single computer or a plurality of computers in conjunction with one another. Moreover, all of the above-described processes does not need to be realized by software, and part or all of the processes may also be realized by hardware such as an ASIC. Furthermore, with regard to the CPU, the configuration is not limited to a case where a single CPU performs all of the processes, and a plurality of CPUs may also appropriately perform the processes in conjunction with one another.

According to the exemplary embodiments of the present invention, it is possible to improve the operability of the user.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

It will be appreciated that an information processing apparatus (e.g. according to any of information processing apparatuses described herein (e.g. according to any of the clauses, claims, or embodiments) comprises a determination means (e.g. CPU 103) configured to determine whether or not the selected communication apparatus includes an operation screen. If it is determined that the selected communication apparatus does not include an operation screen, a display control means (e.g. output interface 107) of the information processing apparatus displays, on a display means of the information processing apparatus, a first message related to an operation method of the selected communication apparatus. If it is determined that the selected communication apparatus does include an operation screen, the display control means displays a second message that is different to the first message. The determination means may also determine whether scan response information (e.g. 803) has been received by the information processing apparatus. Preferably, the scan response information includes predetermined identification information.

## Claims

1. An information processing apparatus (101) comprising:
selection means (102) for selecting a printer (151),
reception means (109) configured to receive information of the selected printer from the selected printer; and
determination means (103) for determining whether or not the selected printer includes an operation screen on the basis of the received information from the selected printer (S507);
display control means (107) configured to:
display a first message related to an operation method of the printer on display means (108) of the information processing apparatus (101), in a case where it is determined that the selected printer does not include an operation screen (S509); and
display a second message different from the first message on the display means of the information processing apparatus in a case where it is determined that the selected printer includes an operation screen; and
wireless communication means (110) configured to execute authentication processing for wirelessly connecting the information processing apparatus to the selected printer in a case where a user executes the operation method related to the first message or a user executes operation of the information processing apparatus related to the second message.

2. The information processing apparatus according to Claim 1,
wherein, in a case where the selected printer includes the operation screen on which authentication information used for the authentication processing can be displayed, the second message displayed on the display means prompts the user to input the authentication information displayed on the operation screen, and
wherein, in a case where the selected printer does not include the operation screen on which authentication information used for the authentication processing can be displayed, the first message displayed on the display means relates to an operation method for printing the authentication information.

3. The information processing apparatus according to Claim 1 or 2,
wherein the information processing apparatus includes first wireless communication means (110) and second wireless communication means (109) that can execute a wireless communication at a higher speed than the first wireless communication means, and
wherein the authentication processing is executed to communicate particular information with the selected printer via the first wireless communication means.

4. The information processing apparatus according to Claim 3,
wherein the first wireless communication means can execute a communication based on Bluetooth Low Energy™ BLE, and
wherein the authentication processing is pairing processing in the BLE.

5. The information processing apparatus according to any one of Claims 1 to 4, wherein, in a case where the selected printer does not include the operation screen on which authentication information used for authentication processing can be displayed, the display control means displays on the display means a screen including the first message, wherein the first message prompts the user to print and indicates information for the operation method of the printer.

6. The information processing apparatus according to any one of Claims 1 to 5, wherein the display control means is configured to display a candidate for authentication processing, wherein the candidate is a selected printer among a plurality of printers which transmits scan response information (S502) including predetermined identification information to the information processing apparatus (101).

7. The information processing apparatus according to any one or claims 1 to 6, further comprising:
determination means for determining whether the scan response information transmitted from the selected printer includes predetermined identification information (S503);
wherein the display control means is configured to display a selection screen including a name of a printer that has transmitted the scan response information including the identification information and not including a name of a printer that has transmitted scan response information not including the identification information;
wherein a printer is selected, using the selection screen (S506).

8. A control method for an information processing apparatus (101), the control method comprising:
selecting a printer (151);
receiving information of the selected printer from the selected printer; and
determining whether or not the selected printer includes an operation screen on the basis of the received information from the selected printer (S507),
displaying, in a case where the selected printer is determined to not include an operation screen, a first message related to an operation method of the selected printer on display means (108) of the information processing apparatus;
displaying, in a case where the selected printer includes an operation screen, a second message different from the first message on the display means of the information processing apparatus; and
executing authentication processing for wirelessly connecting the information processing apparatus to the selected printer in a case where a user executes the operation method related to the first message or a user executes operation of the information processing apparatus related to the second message.

9. The control method according to Claim 8,
wherein, in a case where the selected printer includes the operation screen on which authentication information used for the authentication processing can be displayed, the second message displayed on the display means prompts the user input the authentication information displayed on the operation screen, and
wherein, in a case where the selected printer does not include the operation screen on which authentication information used for the authentication processing can be displayed, the first message displayed on the display means relates to an operation method of printing the authentication information.

10. The control method according to Claim 8 or 9,
wherein the information processing apparatus includes first wireless communication means (110) and second wireless communication means (109) that can execute a wireless communication at a higher speed than the first wireless communication means, and
wherein the authentication processing is executed to communicate particular information with the selected printer via the first wireless communication means.

11. The control method according to Claim 10,
wherein the first wireless communication means can execute a communication based on Bluetooth Low Energy™ BLE, and
wherein the authentication processing is pairing processing in the BLE.

12. The control method according to any one of Claims 8 to 11, wherein, in a case where the selected printer does not include the operation screen on which authentication information used for authentication processing can be displayed, a screen including the first message is displayed on the display means of the information processing apparatus, wherein the first message prompts the user to print and indicates information for the operation method of the printer.

13. The control method according to any one of Claims 8 to 12, further comprising displaying a candidate for authentication processing, wherein the candidate is a selected printer among a plurality of printers which transmits scan response information including predetermined identification information to the information processing apparatus.

14. The control method according to any one of Claims 8 to 13, further comprising:
determining whether the scan response information transmitted from the selected printer includes predetermined identification information (S503);
displaying a selection screen including a name of a printer that has transmitted the scan response information including the identification information and not including a name of a printer that has transmitted scan response information not including the identification information; and
selecting the printer using the selection screen.

15. A program adapted when executed on an information processing apparatus to cause the information processing apparatus to carry out any of the control methods of Claims 8 to 14.

## Patentansprüche

1. Informationsverarbeitungsvorrichtung (101), umfassend:
eine Auswahleinrichtung (102) zum Auswählen eines Druckers (151),
eine Empfangseinrichtung (109), die konfiguriert ist zum Empfangen von Information des ausgewählten Druckers vom ausgewählten Drucker; und
eine Bestimmungseinrichtung (103) zum Bestimmen, ob der ausgewählte Drucker einen Bedienbildschirm umfasst oder nicht, basierend auf der empfangenen Information vom ausgewählten Drucker (S507);
eine Anzeigesteuereinrichtung (107), die konfiguriert ist zum:
Anzeigen einer sich auf ein Bedienverfahren des Druckers beziehenden ersten Nachricht auf einer Anzeigeeinrichtung (108) der Informationsverarbeitungsvorrichtung (101), falls bestimmt wird, dass der ausgewählte Drucker keinen Bedienbildschirm umfasst (S509); und
Anzeigen einer sich von der ersten Nachricht unterscheidenden zweiten Nachricht auf der Anzeigeeinrichtung der Informationsverarbeitungsvorrichtung, falls bestimmt wird, dass der ausgewählte Drucker einen Bedienbildschirm umfasst; und
eine Drahtloskommunikationseinrichtung (110), die konfiguriert ist zum Ausführen einer Authentifizierungsverarbeitung zum drahtlosen Verbinden der Informationsverarbeitungsvorrichtung mit dem ausgewählten Drucker, falls ein Benutzer das sich auf die erste Nachricht beziehende Bedienverfahren ausführt oder ein Benutzer sich auf die zweite Nachricht beziehende Bedienung der Informationsverarbeitungsvorrichtung ausführt.

2. Informationsverarbeitungsvorrichtung nach Anspruch 1,
wobei, falls der ausgewählte Drucker den Bedienbildschirm umfasst, auf dem für die Authentifizierungsverarbeitung verwendete Authentifizierungsinformation angezeigt werden kann, die auf der Anzeigeeinrichtung angezeigte zweite Nachricht den Benutzer auffordert, die auf dem Bedienbildschirm angezeigte Authentifizierungsinformation einzugeben, und
wobei, falls der ausgewählte Drucker den Bedienbildschirm, auf dem für die Authentifizierungsverarbeitung verwendete Authentifizierungsinformation angezeigt werden kann, nicht umfasst, die auf der Anzeigeeinrichtung angezeigte erste Nachricht sich auf ein Bedienverfahren zum Drucken der Authentifizierungsinformation bezieht.

3. Informationsverarbeitungsvorrichtung nach Anspruch 1 oder 2,
wobei die Informationsverarbeitungsvorrichtung umfasst: eine erste Drahtloskommunikationseinrichtung (110) und eine zweite Drahtloskommunikationseinrichtung (109), die eine Drahtloskommunikation mit einer höheren Geschwindigkeit als die erste Drahtloskommunikationseinrichtung ausführen kann, und
wobei die Authentifizierungsverarbeitung ausgeführt wird, um über die erste Drahtloskommunikationseinrichtung bestimmte Information mit dem ausgewählten Drucker zu kommunizieren.

4. Informationsverarbeitungsvorrichtung nach Anspruch 3,
wobei die erste Drahtloskommunikationseinrichtung eine Kommunikation basierend auf Bluetooth Low Energy™ (BLE) ausführen kann und
wobei die Authentifizierungsverarbeitung eine Paarungsverarbeitung im BLE ist.

5. Informationsverarbeitungsvorrichtung nach einem der Ansprüche 1 bis 4, wobei, falls der ausgewählte Drucker den Bedienbildschirm, auf dem für die Authentifizierungsverarbeitung verwendete Authentifizierungsinformation angezeigt werden kann, nicht umfasst, die Anzeigesteuereinrichtung auf der Anzeigeeinrichtung einen die erste Nachricht enthaltenden Bildschirm anzeigt, wobei die erste Nachricht den Benutzer zum Drucken auffordert und Information für das Bedienverfahren des Druckers anzeigt.

6. Informationsverarbeitungsvorrichtung nach einem der Ansprüche 1 bis 5, wobei die Anzeigesteuereinrichtung konfiguriert ist, einen Kandidaten zur Authentifizierungsverarbeitung anzuzeigen, wobei der Kandidat ein aus mehreren Druckern ausgewählter Drucker ist, der vorbestimmte Identifikationsinformation enthaltende Scanantwortinformation an die Informationsverarbeitungsvorrichtung (101) überträgt (S502).

7. Informationsverarbeitungsvorrichtung nach einem der Ansprüche 1 bis 6, ferner umfassend:
eine Bestimmungseinrichtung zum Bestimmen, ob die vom ausgewählten Drucker übertragene Scanantwortinformation vorbestimmte Identifikationsinformation enthält (S503);
wobei die Anzeigesteuereinrichtung konfiguriert ist, einen Auswahlbildschirm anzuzeigen, der einen Namen eines Druckers enthält, der die die Identifikationsinformation enthaltende Scanantwortinformation übertragen hat, und einen Namen eines Druckers nicht enthält, der die die Identifikationsinformation nicht enthaltende Scanantwortinformation übertragen hat;
wobei ein Drucker unter Verwendung des Auswahlbildschirms ausgewählt wird (S506).

8. Steuerverfahren für eine Informationsverarbeitungsvorrichtung (101), wobei das Steuerverfahren umfasst:
Auswählen eines Druckers (151);
Empfangen von Information des ausgewählten Druckers vom ausgewählten Drucker; und
Bestimmen, basierend auf der empfangenen Information vom ausgewählten Drucker (S507), ob der ausgewählte Drucker einen Bedienbildschirm enthält oder nicht,
Anzeigen einer sich auf ein Bedienverfahren des ausgewählten Druckers beziehenden ersten Nachricht auf einer Anzeigeeinrichtung (108) der Informationsverarbeitungsvorrichtung, falls bestimmt wird, dass der ausgewählte Drucker keinen Bedienbildschirm enthält;
Anzeigen einer sich von der ersten Nachricht unterscheidenden zweiten Nachricht auf der Anzeigeeinrichtung der Informationsverarbeitungsvorrichtung, falls der ausgewählte Drucker einen Bedienbildschirm umfasst; und
Ausführen einer Authentifizierungsverarbeitung zum drahtlosen Verbinden der Informationsverarbeitungsvorrichtung mit dem ausgewählten Drucker, falls ein Benutzer das sich auf die erste Nachricht beziehende Bedienverfahren ausführt oder ein Benutzer sich auf die zweite Nachricht beziehende Bedienung der Informationsverarbeitungsvorrichtung ausführt.

9. Steuerverfahren nach Anspruch 8,
wobei, falls der ausgewählte Drucker den Bedienbildschirm umfasst, auf dem für die Authentifizierungsverarbeitung verwendete Authentifizierungsinformation angezeigt werden kann, die auf der Anzeigeeinrichtung angezeigte zweite Nachricht den Benutzer auffordert, die auf dem Bedienbildschirm angezeigte Authentifizierungsinformation einzugeben, und
wobei, falls der ausgewählte Drucker den Bedienbildschirm, auf dem für die Authentifizierungsverarbeitung verwendete Authentifizierungsinformation angezeigt werden kann, nicht umfasst, die auf der Anzeigeeinrichtung angezeigte erste Nachricht sich auf ein Bedienverfahren zum Drucken der Authentifizierungsinformation bezieht.

10. Steuerverfahren nach Anspruch 8 oder 9,
wobei die Informationsverarbeitungsvorrichtung umfasst: eine erste Drahtloskommunikationseinrichtung (110) und eine zweite Drahtloskommunikationseinrichtung (109), die eine Drahtloskommunikation mit einer höheren Geschwindigkeit als die erste Drahtloskommunikationseinrichtung ausführen kann, und
wobei die Authentifizierungsverarbeitung ausgeführt wird, um über die erste Drahtloskommunikationseinrichtung bestimmte Information mit dem ausgewählten Drucker zu kommunizieren.

11. Steuerverfahren nach Anspruch 10,
wobei die erste Drahtloskommunikationseinrichtung eine Kommunikation basierend auf Bluetooth Low Energy™ (BLE) ausführen kann und wobei die Authentifizierungsverarbeitung eine Paarungsverarbeitung im BLE ist.

12. Steuerverfahren nach einem der Ansprüche 8 bis 11, wobei, falls der ausgewählte Drucker den Bedienbildschirm, auf dem für die Authentifizierungsverarbeitung verwendete Authentifizierungsinformation angezeigt werden kann, nicht umfasst, auf der Anzeigeeinrichtung der Informationsverarbeitungsvorrichtung ein die erste Nachricht enthaltender Bildschirm angezeigt wird, wobei die erste Nachricht den Benutzer zum Drucken auffordert und Information für das Bedienverfahren des Druckers angibt.

13. Steuerverfahren nach einem der Ansprüche 8 bis 12, ferner umfassend Anzeigen eines Kandidaten für die Authentifizierungsverarbeitung, wobei der Kandidat ein aus mehreren Druckern ausgewählter Drucker ist, der vorbestimmte Identifikationsinformation enthaltende Scanantwortinformation an die Informationsverarbeitungsvorrichtung überträgt.

14. Steuerverfahren nach einem der Ansprüche 8 bis 13, ferner umfassend:
Bestimmen, ob die vom ausgewählten Drucker übertragene Scanantwortinformation vorbestimmte Identifikationsinformation enthält (S503);
Anzeigen eines Auswahlbildschirms, der einen Namen eines Druckers enthält, der die die Identifikationsinformation enthaltende Scanantwortinformation übertragen hat, und einen Namen eines Druckers nicht enthält, der die die Identifikationsinformation nicht enthaltende Scanantwortinformation übertragen hat; und
Auswählen des Druckers unter Verwendung des Auswahlbildschirms.

15. Programm, das derart ausgestaltet ist, dass es bei Ausführen auf einer Informationsverarbeitungsvorrichtung bewirkt, dass die Informationsverarbeitungsvorrichtung eines der Steuerverfahren der Ansprüche 8 bis 14 ausführt.

## Revendications

1. Appareil de traitement d'informations (101), comprenant :
un moyen de sélection (102) destiné à sélectionner une imprimante (151),
un moyen de réception (109) configuré pour recevoir des informations de l'imprimante sélectionnée en provenance de l'imprimante sélectionnée ; et
un moyen de détermination (103) destiné à déterminer si l'imprimante sélectionnée comprend, ou non, un écran d'exploitation sur la base des informations reçues en provenance de l'imprimante sélectionnée (S507) ;
un moyen de commande d'affichage (107) configuré pour :
afficher un premier message concernant un procédé de mise en œuvre de l'imprimante sur un moyen d'affichage (108) de l'appareil de traitement d'informations (101), dans un cas dans lequel il est déterminé que l'imprimante sélectionnée ne comprend pas d'écran d'exploitation (S509) ; et
afficher un second message différent du premier message sur le moyen d'affichage de l'appareil de traitement d'informations, dans un cas dans lequel il est déterminé que l'imprimante sélectionnée comprend un écran d'exploitation ; et
un moyen de communication sans fil (110) configuré pour exécuter un traitement d'authentification à des fins de connexion par voie sans fil de l'appareil de traitement d'informations à l'imprimante sélectionnée, dans un cas dans lequel un utilisateur exécute le procédé de mise en œuvre associé au premier message ou un utilisateur exécute une opération de l'appareil de traitement d'informations associée au second message.

2. Appareil de traitement d'informations selon la revendication 1,
dans lequel, dans un cas dans lequel l'imprimante sélectionnée comprend l'écran d'exploitation sur lequel peuvent être affichées des informations d'authentification utilisées pour le traitement d'authentification, le second message affiché sur le moyen d'affichage invite l'utilisateur à entrer les informations d'authentification affichées sur l'écran d'exploitation, et
dans lequel, dans un cas dans lequel l'imprimante sélectionnée ne comprend pas l'écran d'exploitation sur lequel peuvent être affichées des informations d'authentification utilisées pour le traitement d'authentification, le premier message affiché sur le moyen d'affichage concerne un procédé de mise en œuvre d'impression des informations d'authentification.

3. Appareil de traitement d'informations selon la revendication 1 ou 2,
où l'appareil de traitement d'informations comprend un premier moyen de communication sans fil (110) et un second moyen de communication sans fil (109) qui permet d'exécuter une communication sans fil à une vitesse plus rapide que celle du premier moyen de communication sans fil, et
dans lequel le traitement d'authentification est exécuté pour une communication d'informations particulières avec l'imprimante sélectionnée par le biais du premier moyen de communication sans fil.

4. Appareil de traitement d'informations selon la revendication 3,
dans lequel le premier moyen de communication sans fil peut exécuter une communication sur la base du Bluetooth à faible consommation d'énergie (BLE, pour *Bluetooth Low Energy™*), et
dans lequel le traitement d'authentification est un traitement d'appariement du BLE.

5. Appareil de traitement d'informations selon l'une quelconque des revendications 1 à 4, dans lequel, dans un cas dans lequel l'imprimante sélectionnée ne comprend pas l'écran d'exploitation sur lequel peuvent être affichées des informations d'authentification utilisées pour un traitement d'authentification, le moyen de commande d'affichage affiche, sur le moyen d'affichage, un écran comprenant le premier message, où le premier message invite l'utilisateur à imprimer des informations, et indique ces dernières, du procédé de mise en œuvre de l'imprimante.

6. Appareil de traitement d'informations selon l'une quelconque des revendications 1 à 5, dans lequel le moyen de commande d'affichage est configuré pour afficher un candidat de traitement d'authentification, où le candidat est une imprimante sélectionnée parmi une pluralité d'imprimantes qui transmet des informations de réponse de balayage (S502) comprenant des informations d'identification prédéterminées à l'appareil de traitement d'informations (101) .

7. Appareil de traitement d'informations selon l'une quelconque des revendications 1 à 6, comprenant en outre :
un moyen de détermination destiné à déterminer si les informations de réponse de balayage transmises à partir de l'imprimante sélectionnée comprennent des informations d'identification prédéterminées (S503) ;
dans lequel le moyen de commande d'affichage est configuré pour afficher un écran de sélection comprenant un nom d'une imprimante qui a transmis les informations de réponse de balayage comprenant les informations d'identification et ne comprenant pas de nom d'une imprimante ayant transmis des informations de réponse de balayage ne comprenant pas les informations d'identification ;
dans lequel une imprimante est sélectionnée au moyen de l'écran de sélection (S506).

8. Procédé de commande d'un appareil de traitement d'informations (101), le procédé de commande comprenant les étapes consistant à :
sélectionner une imprimante (151) ;
recevoir des informations de l'imprimante sélectionnée en provenance de l'imprimante sélectionnée ; et
déterminer si l'imprimante sélectionnée comprend, ou non, un écran d'exploitation sur la base des informations reçues en provenance de l'imprimante sélectionnée (S507),
afficher, dans un cas dans lequel l'imprimante sélectionnée est déterminée comme ne comprenant pas d'écran d'exploitation, un premier message concernant un procédé de mise en œuvre de l'imprimante sélectionnée sur un moyen d'affichage (108) de l'appareil de traitement d'informations ;
afficher, dans un cas dans lequel l'imprimante sélectionnée comprend un écran d'exploitation, un second message différent du premier message sur le moyen d'affichage de l'appareil de traitement d'informations ; et
exécuter un traitement d'authentification à des fins de connexion par voie sans fil de l'appareil de traitement d'informations à l'imprimante sélectionnée dans un cas dans lequel un utilisateur exécute le procédé de mise en œuvre associé au premier message ou un utilisateur exécute une opération de l'appareil de traitement d'informations associée au second message.

9. Procédé de commande selon la revendication 8,
dans lequel, dans un cas dans lequel l'imprimante sélectionnée comprend l'écran d'exploitation sur lequel peuvent être affichées des informations d'authentification utilisées pour le traitement d'authentification, le second message affiché sur le moyen d'affichage invite l'utilisateur à entrer les informations d'authentification affichées sur l'écran d'exploitation, et
dans lequel, dans un cas dans lequel l'imprimante sélectionnée ne comprend pas l'écran d'exploitation sur lequel peuvent être affichées des informations d'authentification utilisées pour le traitement d'authentification, le premier message affiché sur le moyen d'affichage concerne un procédé de mise en œuvre d'impression des informations d'authentification.

10. Procédé de commande selon la revendication 8 ou 9,
dans lequel l'appareil de traitement d'informations comprend un premier moyen de communication sans fil (110) et un second moyen de communication sans fil (109) qui permet d'exécuter une communication sans fil à une vitesse plus rapide que celle du premier moyen de communication sans fil, et
dans lequel le traitement d'authentification est exécuté pour une communication d'informations particulières avec l'imprimante sélectionnée par le biais du premier moyen de communication sans fil.

11. Procédé de commande selon la revendication 10, dans lequel le premier moyen de communication sans fil permet d'exécuter une communication sur la base du Bluetooth à faible consommation d'énergie (BLE, pour *Bluetooth Low Energy™*), et
dans lequel le traitement d'authentification est un traitement d'appariement du BLE.

12. Procédé de commande selon l'une quelconque des revendications 8 à 11, dans lequel, dans un cas dans lequel l'imprimante sélectionnée ne comprend pas l'écran d'exploitation sur lequel peuvent être affichées des informations d'authentification utilisées pour un traitement d'authentification, un écran comprenant le premier message est affiché sur le moyen d'affichage de l'appareil de traitement d'informations, où le premier message invite l'utilisateur à imprimer des informations, et indique ces dernières, du procédé de mise en œuvre de l'imprimante.

13. Procédé de commande selon l'une quelconque des revendications 8 à 12, comprenant en outre l'étape consistant à afficher un candidat de traitement d'authentification, où le candidat est une imprimante sélectionnée parmi une pluralité d'imprimantes qui transmet des informations de réponse de balayage comprenant des informations d'identification prédéterminées à l'appareil de traitement d'informations.

14. Procédé de commande selon l'une quelconque des revendications 8 à 13, comprenant en outre les étapes consistant à :
déterminer si les informations de réponse de balayage transmises à partir de l'imprimante sélectionnée comprennent des informations d'identification prédéterminées (S503) ;
afficher un écran de sélection comprenant un nom d'une imprimante ayant transmis les informations de réponse de balayage comprenant les informations d'identification et ne comprenant pas de nom d'une imprimante ayant transmis des informations de réponse de balayage ne comprenant pas les informations d'identification ; et
sélectionner l'imprimante au moyen de l'écran de sélection.

15. Programme conçu, lorsqu'il est exécuté sur un appareil de traitement d'informations, pour amener l'appareil de traitement d'informations à mettre en œuvre l'un quelconque des procédés de commande selon les revendications 8 à 14.
